(19) Europäisches Patentamt
European Patent Office
Office européen des brevets

(11) Publication number: 0 345 964 A1

(12) EUROPEAN PATENT APPLICATION

(21) Application number: 89305196.1

(22) Date of filing: 23.05.89

(51) Int. Cl.[4]: C08L 27/12 , C08J 5/22 , C25B 13/08 , C25B 1/46

(30) Priority: 08.06.88 GB 8813577

(43) Date of publication of application: 13.12.89 Bulletin 89/50

(84) Designated Contracting States: AT BE CH DE ES FR GB IT LI LU NL SE

(71) Applicant: IMPERIAL CHEMICAL INDUSTRIES PLC
Imperial Chemical House Millbank
London SW1P 3JF(GB)

(72) Inventor: Marshall, Alan
7 Small Wood Close
Middlewich Cheshire(GB)
Inventor: Pilkington, Roger Stephen
9 St Germains Lane
Marsk By Sea Cleveland(GB)
Inventor: Newbold, Alan John
Ivy Cottage Bag Lane
Onston Crowton Cheshire(GB)

(74) Representative: Walmsley, David Arthur Gregson et al
Imperial Chemical Industries PLC Legal department: Patents PO Box 6 Bessemer Road
Welwyn Garden City Hertfordshire AL7 1HD(GB)

# (54) Organic polymeric material and ion-exchange membrane produced therefrom.

(57) A homogeneous blend which comprises from 5 to 95% by weight, preferably at least 40% by weight, of at least one fluoropolymer which contains ion-exchange groups and from 95% to 5% by weight, preferably not more than 60% by weight, of at least one fluoropolymer which is substantially free of ion-exchange groups. The homogeneous blend may be produced by melt processing the fluoropolymers and a major application of the homogeneous blend is as an ion-exchange membrane. The presence of the fluoropolymer substantially free of ion-exchange groups in the homogeneous blend leads to an improvement in physical and mechanical properties of the ion-exchange membrane, and to an improved performance of the membrane in electrolysis.

EP 0 345 964 A1

## ORGANIC POLYMERIC MATERIAL AND ION-EXCHANGE MEMBRANE PRODUCED THEREFROM.

This invention relates to an organic polymeric material and to an ion-exchange membrane produced therefrom, particularly to an ion-exchange membrane which is useful in an electrochemical cell.

Ion-exchange membranes made from organic polymeric materials having ion-exchange properties are used in a wide variety of applications, and the variety of applications of such membranes continues to increase. Such polymeric materials and membranes may contain fixed anionic groups and associated cations and be capable of exchanging cations, or they may contain fixed cationic groups and associated anions and thus be capable of exchanging anions, or the polymeric materials and the membranes may contain both fixed anionic groups and fixed cationic groups.

Ion-exchange membranes are useful in separation processes such as reverse osmosis and ultra filtration. For example, they find wide application in the desalination of sea-water and in the purification of brackish water and industrial effluent. Ion-exchange membranes are also finding many applications in industry, for example, in the concentration of solutions of, for example, fruit juices and pharmaceuticals.

Ion-exchange membranes which are essentially hydraulically impermeable but which are permeable to solvated cations or anions, or both, are finding increasing applications in electrochemical cells, for example in fuel cells, in electrolytic cells in which an electrolyte is electrolysed, and in electrochemical cells in which electrosynthesis is carried out. In recent years a major development has been in the use of cation-exchange membranes in chlor-alkali cells in which chlorine and aqueous alkali metal hydroxide solution are produced by the electrolysis of aqueous alkali metal chloride solution. In such a chlor-alkali cell a cation-exchange membrane is positioned between an anode and an adjacent cathode. Where an aqueous alkali metal chloride solution is electrolysed in an electrolytic cell of this type the solution is charged to the anode compartments of the cell and chlorine produced in the electrolysis and depleted alkali metal chloride solution are removed from the anode compartments, hydrated alkali metal ions are transported across the membrane from the anode compartments to the cathode compartments of the cell to which water or dilute alkali metal hydroxide solution is charged, and hydrogen and alkali metal hydroxide solution produced by the reaction of alkali metal ions with water are removed from the cathode compartments of the cell.

Although many organic polymeric materials have been proposed for use as membranes in such chlor-alkali cells perfluoroorganic polymeric materials containing ion-exchange groups, particularly fixed sulphonic and carboxylic groups, have found favour in such cells in recent years on account of the chemical stability of perfluoroorganic polymeric materials in the corrosive chemical environment encountered in such cells, particularly chemical stability to wet chlorine and to chlorine-containing aqueous alkali metal halide solution and aqueous alkali metal hydroxide solution, which may typically be at temperatures in the region of 90 °C.

An example of a perfluoroorganic polymeric material containing ion-exchange groups is the perfluoroorganic polymer containing sulphonic groups described in GB patent 1034197. The perfluoroorganic polymer may, for example, contain units having the structures

$$-CF_2-CF_2-$$

and

$$-CF_2-CF-$$
$$|$$
$$(OCF_2CFY)_nOCF_2CFR_fSO_2M$$

where $R_f$ is fluorine or a perfluoroalkyl group having from 1 to 10 carbon atoms, e.g. a perfluoromethyl group, n is 1, 2 or 3, Y is fluorine or a trifluoromethyl group, and M is fluorine, a hydroxyl group, an amino group, or a group having the formula -O Met, where Met is an alkali metal or a substituted or an unsubstituted ammonium group. The application of such a perfluoroorganic polymer as an ion-exchange membrane in a chlor-alkali cell is described in GB Patent 1402920. Ion-exchange membranes containing such perfluoroorganic polymers are sold under the trade name 'Nafion' by E I DuPont de Nemours Inc. In a preferred perfluoroorganic polymer of the above structure Y is $CF_3$, n is 1 and $R_f$ is F.

A further example of a perfluoroorganic polymeric material containing ion-exchange groups is the perfluoroorganic polymer containing carboxylic groups described, for example, in GB Patents 1516048 and 1518387. Examples of such perfluoroorganic polymers include copolymers of tetrafluoroethylene and

$CF_2 = CF\ O\ CF_2\ CF_2\ CF_2\ COX$,

$CF_2 = CF\ O\ CF_2\ CF\ (CF_3)\ O\ CF_2\ CF_2\ CF_2\ COX$,

$CF_2 = CF\ O\ (CF_2)_3\ O\ CF\ (CF_3)\ COX$,
$CF_2 = CF\ O\ (CF_2)_4\ OCF(CF_3)\ COX$, and
$CF_2 = CFO\ CF_2\ CF(CF_3)\ OCF_2\ CF_2COX$
where X is, for example, fluorine, a hydroxyl group, an oxyalkyl group, or a group having the formula OM, where M is an alkali metal or a quaternary ammonium group. Ion-exchange membranes containing such perfluoroorganic polymers are sold under the trade name 'Flemion' by Asahi Glass Co Ltd.

Many different types of perfluoroorganic polymeric materials and combinations thereof for use as ion-exchange membranes in chlor-alkali cells have been proposed and those referred to above have been referred to merely by way of example. Furthermore, the ion-exchange membranes which have been proposed have taken a variety of different forms. For example, the ion-exchange membrane may be in the form of a multi-layer laminate of which many examples have been described. Thus, in published Japanese Patent Application 88 004918 there is described a multi-layer laminated cation-exchange membrane which comprises at least two layers and which includes an 80 to 300 micron thick first layer of a perfluorocarbon polymer having carboxylic ion-exchange groups and an ion-exchange capacity of 0.9 to 1.6 meq/g of dry resin and a 5 to 50 micron thick second layer of a perfluorocarbon polymer having sulphonic ion-exchange groups and an ion-exchange capacity of 0.5 to 1.5 meq/g of dry resin. Published Japanese Patent Application 84 124524 describes an ion-exchange membrane which is reinforced with perfluoropolymer fibres, and it specifically describes a leno cloth of polytetrafluoroethylene yarn laminated with a film of a copolymer of tetrafluoroethylene and $CF_2 = CFO\ (CF_2)_3COOCH_3$. Ion-exchange membranes have also been described which comprise a blend of fluoropolymers which contain different ion-exchange groups. For example, published Japanese Patent Application 87 53341 describes a laminate of a 110 to 300 micron thick film of a blend of a fluoropolymer containing sulphonic groups and a fluoropolymer containing carboxylic groups and a 5 to 75 micron thick film of a fluoropolymer containing carboxylic groups. Ion-exchange materials have also been described which are a blend of fluoropolymers containing ion-exchange groups and fluoropolymers which do not contain ion-exchange groups. For example in USSR patent 442190 there is described a blend of rubber-like fluorocopolymer and a tetrafluoroethylene-perfluoro-2(2-fluorosulphonylethoxy)- propylvinylether copolymer. In an example powdered sulphonylethoxy copolymer is added to a vinylidene fluoride-perfluoro-(methylvinyl) ether copolymer at 60 °C and then mixed on rollers to form a film.

The present invention relates to an organic polymeric material, and to an ion-exchange membrane produced therefrom, which comprises a blend of at least one polymeric material which contains ion-exchange groups or groups convertible thereto and at least one polymeric material which is substantially free of ion-exchange groups. The invention is based on the observation that the blend of organic polymeric materials, when used in the form of an ion-exchange membrane is particularly effective in preventing hydraulic transfer of electrolyte between the anode compartments and the cathode compartments of an electrolytic cell in which the membrane is installed, when compared with the performance of a membrane made solely from the polymeric material which contains ion-exchange groups or groups convertible thereto. The ion-exchange membrane made from the blend of polymeric materials is thus particularly effective in ensuring production of a high purity product of electrolysis. For example, when the ion-exchange membrane is installed in an electrolytic cell in which aqueous alkali metal chloride solution is electrolysed it is found that the concentration of chloride ion in the alkali metal hydroxide solution which is produced in the cathode compartments of the cell is very low, and in particular is substantially less than is the case where the ion-exchange membrane which is used does not comprise a polymeric material which is substantially free of ion-exchange groups. Furthermore, the presence of the latter polymeric material in the blend, and in the ion-exchange membrane produced therefrom, has a beneficial effect on many of the physical and mechanical properties of the polymeric material and of the membrane, and it may also serve to cheapen the polymeric material and the ion-exchange membrane, depending of course on the choice of polymeric material which does not contain ion-exchange groups and on the proportion thereof in the blend.

According to the present invention there is provided a homogeneous blend of organic polymeric materials which comprises from 5% to 95% by weight of at least one fluoropolymer which contains ion-exchange groups or groups convertible thereto and from 95% to 5% by weight of at least one fluoropolymer which is substantially free of ion-exchange groups or groups convertible thereto.

By homogeneous blend there is meant an intimate mixture such as may be formed, for example, by melt blending the fluoropolymers, that is by mixing the fluoropolymers at or above a temperature at which both fluoropolymers are in a fluid/molten state, or by blending the fluoropolymers in a solvent in which both fluoropolymers are soluble, and thereafter separating the blend of fluoropolymers from the solution. A homogeneous blend of the type of the present invention is not formed for example merely by forming a mixture of the solid fluoropolymers in particulate form. Nor is a homogeneous blend formed, for example,

by adding one fluoropolymer in a solid particulate form to a band of an elastomeric fluoropolymer formed on the rolls of a twin-roll mill under conditions where the former fluoropolymer remains in solid particulate form.

In the homogeneous blend of the present invention at least one of the fluoropolymers contains ion-exchange groups or groups convertible thereto. As will be described in more detail hereafter groups of the latter type are groups which are not themselves capable of effecting ion-exchange but which may be converted e.g. by hydrolysis, to groups which are capable of effecting ion-exchange. For simplicity, and unless the context dictates otherwise, both of these types of group will be referred to hereafter as ion-exchange groups.

In the homogeneous blend at least one of the fluoropolymers is substantially free of ion-exchange groups. Whilst this latter fluoropolymer may contain no ion-exchange groups it would be unduly limiting on the scope of the invention to specify that this fluoropolymer necessarily does not contain any ion-exchange groups. However, the proportion of such groups, if any, in the fluoropolymer, is very small such that the fluoropolymer alone is effectively not capable of acting as an ion-exchange material. For example, the fluoropolymer may be entirely free of ion-exchange groups or, if such groups are present, they may be present in an amount of less than 0,2 milliequivalents (meq) of such groups per gram of dry fluoropolymer.

The homogeneous blend of fluoropolymers of the invention will have many applications but the major applications will be those in which use is made of the ion-exchange properties of the blend. However, the homogeneous blend is not limited to use as an ion-exchange material and the blend may be used as a plastic material, and depending on its properties, as an elastomeric material.

The beneficial effect which results from use of the homogeneous blend as an ion-exchange membrane, namely the production of high purity products of electrolysis, and the beneficial effect on the physical and mechanical properties of the polymeric material and of the ion-exchange membrane, are dependent to some extent at least on the relative proportions of the fluoropolymer which contains ion-exchange groups and of the fluoropolymer which is substantially free of ion-exchange groups in the homogeneous blend, and specific beneficial effects may be produced, or may be optimised, by use of particular proportions of these fluoropolymers. Specific physical and mechanical properties of a fluoropolymer containing ion-exchange groups, and of a membrane produced therefrom, which may be modified by inclusion of a fluoropolymer which is substantially free of ion-exchange groups in the homogeneous blend include increased tear strength (see Example 3), increased elastic modulus, elongation at break and toughness (Example 4). reduction in swelling of a membrane when contacted with an electrolyte thus at least reducing the undesirable wrinkling of the membrane which may take place on contact with an electrolyte (Example 5), modification of the melt viscosity of the homogeneous blend so that it is possible to match the melt viscosity of the homogeneous blend with that of a different polymeric material, e.g. a different fluoropolymer containing ion-exchange groups, with which it may be desired to co-process, e.g. co-extrude, the blend thus facilitating the co-processing (Example 6), and increased strength of the bond between laminated sheets produced from homogeneous blends (Example 7). Specific physical and mechanical properties of a fluoropolymer which is substantially free of ion-exchange groups which may be modified by inclusion of a fluoropolymer which contains ion-exchange groups in the homogeneous blend include increased surface wettability (see Example 8), reduced thermal creep, and modified melt viscosity which may aid co-processing with a different polymeric material.

A major application of the homogeneous blend is as an ion-exchange membrane, or as a part thereof, in which the blend is in the form of a sheet or film or is in the form of one or more of the layers of a sheet or film which itself comprises a plurality of layers.

Application of the homogeneous blend as an ion-exchange membrane will depend inter alia on the proportion of fluoropolymer containing ion-exchange groups in the blend,as will be discussed hereafter.

The homogeneous blend of fluoropolymers may be in the form of a sheet or film having a thickness in the range of for example 50 to 500 microns, or it may be in the form of a layer of thickness in the range for example 25 to 250 microns, or 1 to 25 microns if cast from a solution of the blend, in a membrane which itself is in the form of a sheet or film comprising a plurality of layers.

In a further embodiment of the invention there is provided an electrolytic cell which comprises at least one anode and at least one cathode in which each anode and adjacent cathode are separated by an ion-exchange membrane which comprises a homogeneous blend of fluoropolymers of the invention. The electrolytic cell may, for example, be of the monopolar or bipolar type and it may take a variety of forms.

A large number of different types of membrane electrolytic cells have been described and are well-known in the art and the precise construction of the electrolytic cell does not form part of the present invention. Indeed, as such electrolytic cells are well-known further description is not necessary.

The homogeneous blend of fluoropolymers may be prepared in a variety of different ways provided that

the required homogeneous blend is produced. However, a preferred method of producing the homogeneous blend is by melt-blending of the fluoropolymers, and thus it is preferred that both the fluoropolymer containing ion-exchange groups and the fluoropolymer which is substantially free of ion-exchange groups are capable of being melted to a liquid state. A homogeneous blend of the fluoropolymers could not be formed by melt blending if one or both of the polymers was not capable of being melted. The melt-blending may be effected by any suitable plastics processing techniques, for example, by forming a mixture of the solid fluoropolymers, charging the mixture to an extruder, preferably to a screw extruder, heating the mixture in the extruder to a temperature at which both fluoropolymers are fluid/molten, and extruding the mixture from the extruder through a suitably shaped die. Increasing homogeneity of the blend may be achieved by repeated extrusion of the blend. As the fluoropolymers may tend to be thermally unstable, particularly at temperatures which are substantially above the optimum melt processing temperatures of the fluoropolymers, it is preferred that the fluoropolymer containing ion-exchange groups and the fluoropolymer which is substantially free of ion-exchange groups have optimum melt processing temperatures which differ by not more than 150°C, more preferably by not more than 100°C. It is preferred that the melting points of the fluoropolymers differ by not more than 150°C, more preferably not more than 100°C.

The homogeneous blend of fluoropolymers may be formed by dissolving both fluoropolymers in a common solvent and depositing the blend from the solution, for example by casting the solution into a film and causing or allowing the solvent to evaporate, or by mixing the solution with a non-solvent for the fluoropolymers. The solvent may be a mixture of two or more different liquids and the selection of a suitable solvent will of course depend on the nature of the fluoropolymers which it is desired to form into a homogeneous blend.

The homogeneous blend may be produced by blending the fluoropolymers in the form of an emulsion of the fluoropolymers in a liquid medium and separating the blend by coagulation. The thus formed blend may then, for example, be formed into a membrane by melt-processing techniques

It is preferred that one or other, and more preferably both, of the fluoropolymer containing ion-exchange groups and the fluoropolymer which is substantially free of ion-exchange groups are perfluoropolymers, as a homogeneous blend of such perfluoropolymers has a superior resistance to chemical attack by the chemical media with which the homogeneous blend may come into contact during use. For example, where the homogeneous blend is used in the form of an ion-exchange membrane in a chlor-alkali cell a homogeneous blend of perfluoropolymers has increased resistance to chemical attack by the wet chlorine, by the chlorine-containing aqueous alkali metal halide solution, and by the aqueous alkali metal hydroxide solution in such a cell.

The fluoropolymer which contains ion-exchange groups may contain fixed cationic groups, that is cationic groups linked to the fluoropolymer, and an associated anion, in which case the fluoropolymer will be an anion-exchange material. Alternatively, the fluoropolymer may comprise fixed anionic groups and an associated cation in which case the fluoropolymer will be a cation-exchange material. Materials of the latter type are generally more useful. It is also possible that the fluoropolymer may comprise both fixed cationic and fixed anionic groups, and associated anions and cations respectively, such that the fluoropolymer will function both as an anion-exchange material and as a cation-exchange material.

Suitable cation-exchange groups, including groups convertible thereto, include groups of the sulphonic, carboxylic and phosphonic type.

For example, the group may have the structure $-SO_2X$, where X is OM and where M is H, or alkali metal, eg. sodium or potassium, or an ammonium or quaternary ammonium group. Alternatively, X may be halogen, e.g. fluorine, in which case the group $-SO_2X$ is not itself capable of ion-exchange. The latter group may be hydrolysed in order to convert it to a group which is itself capable of effecting ion-exchange. The group may have the structure -COY where Y is OM and where M is H, or alkali metal, eg. sodium or potassium, or an ammonium or quaternary ammonium group. Alternatively, Y may be halogen, eg. fluorine, or it may be an oxyalkyl group, in which case the group -COY is not itself capable of effecting ion-exchange. The latter group may be hydrolysed in order to convert it to a group which is itself capable of effecting ion-exchange. Another suitable group which may be converted to an ion-exchange group, e.g. by hydrolysis, is the group -CN. Where the fluoropolymer containing ion-exchange groups is to be melt processed care may need to be exercised in selection of the ion-exchange groups on the fluoropolymers. Thus fluoropolymers containing groups $-SO_2X$ where X is halogen, particularly F, are readily melt processable whereas in the case where X is OM and M is hydrogen or alkali metal the fluoropolymer is not as readily melt processable. Where the fluoropolymer contains ion-exchange groups -COY Y is preferably halogen or oxyalkyl in the case where the fluoropolymer is to be melt processed.

Suitable anion-exchange groups, or groups convertible thereto, include a group comprising quaternary ammonium, e.g. a group $-N(alkyl)_4X$ where X is a halogen, eg. $-CH_2N(CH_3)_3^+Cl^-$ and the group $-CH_2$-NH-

$CH_2CH_2N(CH_3)_3{}^+Cl^-$ , or the corresponding groups which are convertible to ammonium groups, that is $-CH_2N(CH_3)_2$ and $-CH_2-NH-CH_2CH_2-N(CH_3)_2$. Many different types of fluoropolymer containing ion-exchange groups have been described. The fluoropolymer may be a copolymer of a fluoro-olefine, e.g. tetrafluoroethylene, and an ethylenically unsaturated fluorine-containing monomer which contains an ion-exchange group. The latter ethylenically unsaturated monomer may have the structure

$CF_2 = CF-A-Z$

where A is a direct link or a divalent group and Z is or comprises an ion-exchange group. The group A may be an alkylene group, for example $-(CF_2)_n$, where n is an integer, or such an alkylene group in which one or more of the fluorine atoms are substituted by alkyl groups. The group A may be an oxyalkylene group, for example a group $[O(CF_2)_n]_m$ where n and m are integers, which may be the same or different, and in which n is generally 2 and m is generally 1 to 3, or the latter group in which one or more of the fluorine atoms are substituted by alkyl groups, for example, fluoroalkyl groups, e.g. perfluoroalkyl groups. Where m is more than 1 the values of n in the separate groups $-O(CF_2)_n-$ may be the same or different. Merely by way of example the divalent group may be

$-O\ CF_2\ CF_2-$

$-O\ CF_2\ CF_2\ CF_2-$

$-O\ CF_2\ CF\ (CF_3)\ O\ CF_2\ CF_2\ CF_2-$

$-O\ (CF_2)_3\ O\ CF\ (CF_3)-$

$-O\ (CF_2)_4\ OCF(CF_3)-$

$-O\ CF_2\ CF(CF_3)\ OCF_2\ CF_2-$

The homogeneous blend of the invention may contain more than one fluoropolymer containing ion-exchange groups, and the latter fluoropolymers may contain ion-exchange groups which are the same or different.

A very large number of fluoropolymers containing ion-exchange groups have been described in recent years and, within the general constraints hereinbefore referred to, the fluoropolymer containing ion-exchange groups in the homogeneous blend of the invention may be any one or more suitable such fluoropolymers.

The homogeneous blend of the invention comprises one or more fluoropolymers which are substantially free of ion-exchange groups. Examples of suitable such fluoropolymers include fluorinated ethylene-propylene copolymer, a copolymer of tetrafluoroethylene and hexafluoropropylene, polyvinylidene fluoride. an ethylene-tetrafluoroethylene copolymer, and a tetrafluoroethylene-perfluorinated alkyl vinyl ether copolymer.

In the homogeneous blend of the invention it is clearly desirable that where the blend is to be used as an ion-exchange material the blend should have an ion-exchange capacity which is sufficiently high that the blend can act as an ion-exchange material. The ion-exchange capacity of the homogeneous blend will be governed by the ion-exchange capacity of the fluoropolymer containing ion-exchange groups which is present in the blend and the proportion of the latter fluoropolymer in the blend.

The fluoropolymer containing ion-exchange groups may, for example, contain as little as 0.5 meq of ion-exchange groups per gram of dry fluoropolymer, or as much as 8 meq $g^{-1}$. Where the ion-exchange capacity of the fluoropolymer containing ion-exchange groups is low the homogeneous blend should contain a substantial proportion of this fluoropolymer if the homogeneous blend is itself to have an acceptable ion-exchange capacity. On the other hand, where the ion-exchange capacity of the fluoropolymer containing ion-exchange group is high then the homogeneous blend may itself have an acceptable ion-exchange capacity even where the blend contains only a low proportion of the latter fluoropolymer. It is preferred, where the homogeneous blend is to be suitable for use in ion-exchange applications, that the blend has an ion-exchange capacity in the range 0.5 to 5.0 meq $g^{-1}$, more preferably in the range 0.6 to 2.0 meq $g^{-1}$.

The homogeneous blend may contain, for example, from 15% to 95% by weight of at least one fluoropolymer which contains ion-exchange groups and from 85% to 5% by weight of at least one fluoropolymer which is substantially free of ion-exchange groups. However, the proportions of these fluoropolymers in the homogeneous blend will depend to some extent on the intended use of the blend. For example, where the homogeneous blend is to be used as an ion-exchange membrane in an electrochemical cell the membrane must not only have an acceptable ion-exchange capacity it must also be sufficiently electrically conductive when used as a membrane. For this latter reason it is preferred that the homogeneous blend when in the form of an ion-exchange membrane, comprises at least 40% by weight of at least one fluoropolymer which contains ion-exchange groups, more preferably at least 60% by weight, and correspondingly not more than 60%, more preferably not more than 40%, by weight of at least one fluoropolymer which is substantially free of ion-exchange groups.

On the other hand, where the homogeneous blend is to be used in an application other than as an ion-exchange membrane, the blend may comprise a proportion of the fluoropolymer which is substantially free of ion-exchange groups near the upper end of the range 5% to 95% by weight, although the proportion of this latter fluoropolymer will depend on the particular intended use of the blend.

In general the proportions of fluoropolymer containing ion-exchange groups to fluoropolymer substantially free of ion-exchange groups in the homogeneous blend will vary over a range 20% to 80%:80% to 20% by weight.

If desired the homogeneous blend of the invention, particularly when in the form of a sheet or film suitable for use as an ion-exchange membrane, may be reinforced, e.g. with a net or mesh or fibrils of a fluoropolymer, e.g. of polytetrafluoroethylene or of tetrafluoroethylene-hexafluoropropylene copolymer.

The invention is illustrated by the following examples.

Example 1

Production of Fluoropolymer containing Ion-exchange Groups.

A 5 litre capacity autoclave was evacuated and charged with 2.5ℓ of deionised water, 14.3g of ammonium perfluorooctanoate, and 400g of a perfluorovinyl ether having the structure

$CF_2=CF-OCF_2CF(CF_3)-O-CF_2CF_2-SO_2F$.

The autoclave was purged with nitrogen, the contents of the autoclave were thoroughly agitated, 2.6g of ammonium persulphate initiator as a solution in 100 ml of deionised water were added to the emulsion which had been formed by agitation, and the autoclave was re-evacuated. Tetrafluoroethylene gas was charged to the autoclave up to a pressure of 8 bar g, the autoclave was heated to 70°C, and further tetrafluoroethylene was added to maintain the pressure at 7 bar g. After 1.5 hours agitation was stopped, the autoclave was vented, and the contents of the autoclave were cooled and removed. The resultant emulsion of fluoropolymer was allowed to stand and was then separated from unreacted perfluorovinylether, the fluoropolymer was coagulated by cooling the emulsion to a temperature of -30°C, the fluoropolymer was isolated by filtration and the fluoropolymer was washed with deionised water, and then dried in vacuum at 70°C and recovered in powder form.

A portion of the dried fluoropolymer powder was pressed at 230°C into the form of a clear film and the film was then immersed in a mixture of 75 ml of 32% by weight aqueous sodium hydroxide solution and 25 ml of methanol at 70°C for 16 hours in order to hydrolyse the groups $-SO_2F$ to $-SO_3Na$. The proportion of the groups $-SO_3Na$ in the film was estimated by titration. The equivalent weight of the fluoropolymer containing the groups $-SO_3Na$ in the film was 1230 (ion-exchange capacity 0.81 meq $g^{-1}$), and thus the equivalent weight of the fluoropolymer containing the groups $SO_2F$ was also 1230, which corresponds to a copolymer containing 64% by weight of units derived from tetrafluoroethylene and 36% by weight of units derived from the perfluorovinylether.

Production of Fluoropolymer Blend

75g of a fluoropolymer as produced above in powder form, and 75g of a copolymer of tetrafluoroethylene and hexafluoropropylene (Teflon FEP100 made by El Du Pontde Nemours Inc) in the form of 2mm long by 2 mm diameter chips were mixed and agitated and charged to a screw extruder, heated in the barrel of the extruder, to a temperature of 320°C, and extruded through a 2 mm diameter die which was heated to a temperature 300°C. The extrudate was cut into 3 mm lengths and re-extruded under the same conditions, and the cutting and extrusion procedure was repeated once more except that in this final extrusion the temperature of the die was 313°C.

The fluoropolymer blend extrudate was cut into 4 mm lengths and charged to a compression mould, heated to 280°C over a period of 5 minutes, pressed at this temperature, and finally cooled to ambient temperature over a period of 5 minutes. A clear and smooth micron thick film was removed from the mould (Membrane A).

The $-SO_2F$ groups in the film were hydrolysed to $-SO_3Na$ groups by immersing the film in a mixture of 75ml of a 32% by weight aqueous sodium hydroxide solution and 25ml of methanol at 70°C for 16 hours. After removal from the solution the film was washed in deionised water and dried. The equivalent weight of the the fluoropolymer blend of the film was 2400 (ion-exchange capacity 0.42 meq $g^{-1}$).

A second film was produced by compression moulding following the above procedure except that the

film had a thickness of 140 microns (Membrane B).

Example 2

Production of Fluoropolymer containing Ion-exchange Groups

A fluoropolymer containing ion-exchange groups was produced following the procedure described in Example 1 except that 15.0g of ammonium perfluorooctanoate were used and the equivalent weight of the fluoropolymer which was produced was 940, (ion-exchange capacity 1.06 meq $g^{-1}$), corresponding to a copolymer containing 53% by weight of units derived from tetrafluoroethylene and 47% by weight of units derived from the perfluorovinyl ether.

Production of Fluoropolymer Blend

The procedure of Example 1 was followed except that 149g fluoropolymer produced as described above and, in place of the tetrafluoroethylene-hexafluoropropylene copolymer of Example 1, 149g of polyvinylidene fluoride (Solef PVdF 1008 made by Solvay) were used, resultant mixtures where extruded twice, the temperatures of the barrel of the extruder were 240 °C and 210 °C, and the die temperatures of the extruder were 240 °C and 200 °C in the first and second extrusions respectively, and in producing a film by compression moulding a temperature of 190 °C was used.

The equivalent weight of the fluoropolymer blend of the film was 1900 (ion-exchange capacity 0.53 meq $g^{-1}$).

Fluoropolymer Blends as Ion-exchange membranes.

Evaluation was carried out in an electrolytic cell equipped with a titanium mesh anode the surface of which had a coating of a solid solution of 35% by weight $RuO_2$ and 65% by weight $TiO_2$, and a nickel cathode comprising a series of parallel vertical blades, the fluoropolymer film being positioned as a membrane between the anode and cathode and in contact therewith. In the evaluation an electrolyte of a saturated aqueous solution of either sodium chloride or potassium chloride was charged continuously to the anode compartment of the cell and water was charged continuously to the cathode compartment of the cell and chlorine and depleted solution were removed continuously from the anode compartment and hydrogen and a 20% by weight aqueous solution of either sodium or potassium hydroxide were removed continuously from the cathode compartment. The cell temperature was maintained at 88 °C and electrolysis was conducted at a constant current density of $3kAm^{-2}$.

Results of the evaluation in the electrolytic cell of the membranes designated A and B, and for the purposes of comparison, results of the evaluation of three membranes outside the scope of the invention are given in the accompanying Table 1.

TABLE 1

| Electrolyte | Membrane | Current Efficiency[a] % | Cell Voltage Volts | NaCl(or KCl) NaOH (or KOH) solution ppm (w/v) | Duration of Electrolysis days |
|---|---|---|---|---|---|
| NaCl | A | 57 | 3.4 | 70 | 60 |
| NaCl | B | 64 | 3.9 | 15 | 30 |
| NaCl | Comparison 1 | 64 | 3.2 | >200 | 60 |
| NaCl | Comparison 2 | 72 | 3.2 | >200 | 60 |
| KCl | A | 93 | 4.5 | 1 | 10 |
| KCl | Comparison 3 | 93 | 3.9 | 20 | 30 |

a. For production of 20% by weight NaOH or KOH.
Comparison 1. 230 micron thick film produced from a fluoropolymer containing ion-exchange groups produced as described in Example 1.
Comparison 2. 120 micron thick film produced from a fluoropolymer containing ion-exchange groups produced following the procedure as described in Example 1 and having an equivalent weight of 1490.
Comparison 3. 230 micron thick film produced from a fluoropolymer containing ion-exchange groups produced following the procedure as described in Example 1 and having an equivalent weight of 1340.

These results indicate that use of a blend of a fluoropolymer containing ion-exchange groups and a fluoropolymer which does not contain ion-exchange groups as an ion-exchange membrane results in much improved chloride ion rejection during the electrolysis of aqueous alkali metal chloride solution.

Example 3

The polymerisation procedure of Example 1 was followed to produce a copolymer of tetrafluoroethylene and $CF_2=CF\text{-}OCF_2CF(CF_3)OCF_2CF_2SO_2F$ having an equivalent weight of the groups $-SO_2F$ of 1150.

The blending procedure of Example 1 was followed to produce three blends (A, B and C) of, respectively, 75g, 60g and 50g of the copolymer referred to above and 25g, 40g and 50g of the copolymer of tetrafluoroethylene and hexafluoropropylene as used in Example 1, and each blend was compression moulded into a film of thickness approximately 200 microns at a temperature of 225°C for samples A and B and at a temperature of 240°C for sample C.

For the purposes of comparison films of the copolymer of tetrafluoroethylene and $CF_2=CF\text{-}OCF_2CF\text{-}(CF_3)OCF_2CF_2SO_2F$ (D) and of the copolymer of tetrafluoroethylene and hexafluoropropylene (E) of approximate thickness 200 microns were also produced by pressing at 210°C and 280°C respectively.

Sixteen specimens were then cut from each of the films and of these specimens eight were subjected to the hydrolysis treatment of Example 1 except that the treatment was effected for 90 hours.

The tear strength of each of the specimens was then measured following the procedure of BS 2782 method 360 B 1980 except that the test specimens cut from the films had a length of 51 mm and a width of 7 mm and the lengthwise cut in the specimens had a length of 47 mm thus forming two "legs" on each specimen. The thickness of each specimen was measured and the "legs" of each specimen were clamped in a tensile testing machine and separated at a rate of 50 mm $min^{-1}$ in order to propagate the cut in each specimen.

For each specimen the ultimate tear strength defined as the maximum force required to propagate a tear divided by the specimen thickness, and the average tear strength defined as the average force required to propagate a tear divided by the specimen thickness was measured. The tear strengths quoted in table 2 are average values determined from the specimens cut from each of the films.

TABLE 2

| Sample | Tear Strength $Nmm^{-2}$ | | | |
|---|---|---|---|---|
| | Ultimate | | Average | |
| | U | H | U | H |
| A | 10.3 | 2.6 | 0.1 | 1.8 |
| B | 13.9 | 2.95 | 12.3 | 2.2 |
| C | 18.4 | 8.3 | 16.7 | 7.4 |
| D | 9.9 | 1.8 | 8.6 | 1.3 |
| E | 21.4 | 21.2 | 18.5 | 17.9 |

U = unhydrolysed specimen
H = specimen subjected to hydrolysis treatment

Example 4

The procedure of Example 3 was followed to produce films of blends of, respectively, 50g, 20g and 10 of a copolymer of tetrafluoroethylene and $CF_2 = CFOCF_2CF(CF_3)OCF_2CF_2SO_2F$ and 50g, 80g and 90g of the copolymer of tetrafluoroethylene and hexafluoropropylene (A, B and C), except that the copolymer containing $-SO_2F$ groups had an equivalent weight of these latter groups of 1230, Films of the copolymer containing $-SO_2F$ groups (D) and of the copolymer of tetrafluoroethylene and hexafluoropropylene (E) were also produced.

Sixteen specimens were then cut from each of the films and of these specimens eight were subjected to the hydrolysis treatment of Example 1 except that the treatment was effected for 90 hours.

The tensile modulus, elongation at break, and toughness of each of the specimens was then measured following the procedure of BS 2782 part 3 method 326 B 1980 except that the "dumbell" shaped test specimens cut from the films had a neck of length 22 mm and a width of 5 mm. The mean thickness of each specimen was measured and the specimens were fastened in the grips of a tensile testing machine and the grips separated at a rate of 50 mm/min.

The average values of elastic modulus, elongation at break, and toughness of each specimen, defined as follows, were determined

| | |
|---|---|
| Elastic modulus (MPa) - | Slope of the tangent to the stress-strain curve at low elongations. |
| Elongation at break (%) | The elongation at break produced in the neck expressed as a percentage of the original neck length. |
| Toughness (MPa) | The area under the stress-strain curve. |

Results are given in the following table 3

U = Unhydrolysed specimen

H = Specimen subjected to hydrolysis treatment.

TABLE 3

| Sample | Elastic Modulus MPa | | Elongation at break % | | Toughness MPa | |
|---|---|---|---|---|---|---|
| | U | H | U | H | U | H |
| A | 123.6 | 239.5 | 270 | 101 | 33 | 15.4 |
| B | 319.6 | 332.1 | 285 | 246 | 39.3 | 34.1 |
| C | 357.7 | 382.5 | 284 | 274 | 40.6 | 38.9 |
| D | 32.2 | 230 | 270 | 77 | 25.3 | 14.7 |
| E | 382 | 353.4 | 257 | 245 | 39.2 | 37.2 |

Example 5

The procedure of Example 3 was followed to produce films of blends, of respectively, 75g, 60g and 50g of a copolymer of tetrafluoroethylene and $CF_2 = CFOCF_2CF(CF_3)OCF_2CF_2SO_2F$ and 25g, 40g and 50g of the copolymer of tetrafluoroethylene and hexafluoropropylene (A, B and C), except that the copolymer containing $-SO_2F$ groups had an equivalent weight of 1150, and films of the copolymer containing $-SO_2F$ groups (D) and of the copolymer of tetrafluoroethylene and hexafluoropropylene (E).

Each of the films had a thickness of approximately 100 microns.

120 mm x 120 mm samples of each of the films were then subjected to the hydrolysis treatment of Example 1, except, that the treatment was effected for 24 hours, and the hydrolysed and dried samples were then soaked in 322 weight % aqueous NaOH solution for 24 hours at 70°C. The dimensions of each of the samples was measured after the hydrolysis treatment (result X) and after soaking in aqueous NaOH solution (result Y) and in each case the percentage increase in length of one side of each sample when compared with the same side of the original sample was determined. The results are given in Table 4.

TABLE 4

| Sample | % increase in length | |
|---|---|---|
| | X | Y |
| A | 6.7 | 6.3 |
| B | 3.3 | 2.9 |
| C | 1.8 | 0 |
| D | 13 | 11 |
| E | 0 | 0 |

Example 6

The procedure of Example 3 was followed to produce of blends, of respectively, 90g, 75g, 60g, and 50g of a copolymer of tetrafluoroethylene and $CF_2 = CFOCF_2CF(CF_3)OCF_2CF_2SO_2F$ and 10g, 25g, 40g and 50g of the copolymer of tetrafluoroethylene and hexafluoropropylene (A, B, C and D), except that the copolymer containing $-SO_2F$ groups had an equivalent weight of these latter groups of 1080. The polymerisation procedure of Example 1 was followed to produce a copolymer of tetrafluoroethylene and $CF_2 = CF\ OCF_2CF(CF_3)OCF_2CF_2SO_2F$ having an equivalent weight of 1410 (E).

The viscosity of each of the samples A to E and of the copolymer of equivalent weight 1080 (F), was determined at a temperature of 260°C on a dynamic viscometer (Rheometrics Dynamic Spectrometer, model 7700) operating in parallel plate mode at an applied strain of 10% at an angular frequency of

oscillation of 0.1-500 rad $s^{-1}$ and a shear rate of 100 $s^{-1}$.

The viscosity of each of the samples and the variation of viscosity with the proportion of copolymer of tetrafluoroethylene-hexafluoropropylene in the blend is illustrated in Figure 1.

Example 7

The procedure of Example 1 was followed to produce a copolymer (A) of tetrafluoroethylene and $CF_2$ = CF-$OCF_2CF$ $(CF_3)OCF_2CF_2SO_2F$ having an equivalent weight of 1060.

The procedure of Example 1 was also followed to produce a copolymer (B) of tetrafluoroethylene and $CF_2$ = CF-$OCF_2$ $CFC(CF_3)OCF_2$ $CF_2$ $SO_2F$ having an equivalent weight of 1410.

A blend (C) was produced from 75g of copolymer A and 25g of a low viscosity copolymer of tetrafluoroethylene- hexafluoropropylene copolymer (Teflon FEP TE 9250 made by du Pont) by processing the mixture in an extruder at a barrel temperature of 305 °C and a die temperature of 270 °C.

A blend D was produced from 75g of copolymer B and 25g of a low viscosity copolymer of tetrafluoroethylene-hexafluoropropylene copolymer (Teflon FEP TE 9250 made by du Pont) by processing the mixture in an extruder at a barrel temperature of 310 °C and a die temperature of 275 °C.

Each of the samples A to D was compression moulded into a 450 micron thick film at a temperature of 250 °C, 270 °C, 250 °C and 300 °C respectively, and 3 inch x 2 inch samples were cut from each film. The sample of film A was placed face to face with the sample of film B with a 1 inch x 1 inch x 7 micron film of a polyimide positioned between the films at the ends thereof, and the films were pressed in a mould at 235 °C for 240 seconds under a pressure of 225 kg/$cm^2$, these latter conditions having been found by experiment to give the strongest bond between the films. Application of pressure laminated films A and B together, except at those parts separated by polyimide film.

The sample of film C was placed face to face with the sample of film D with a 1 inch x 1 inch x 7 micron film of a polyimide positioned between the films at the ends thereof, and the films were pressed in a mould at 260 °C for 240 seconds under a pressure of 225 kg/$cm^2$, these latter conditions having been found by experiment to give the strongest bond between the films. Application of pressure laminated films C and D together, except at those parts separated by the polyimide film.

Each of the samples of laminated films was then hydrolysed by immersing the laminated films in an aqueous solution 11% by weight of KOH and 30% by weight of dimethylsulphoxide at 90 °C for 1 hour, and the samples of laminated films were washed in water and dried and the polyimide film removed.

The peel strength of each of the laminated films was determined in an Instron machine at a draw speed of 200 mm $min^{-1}$.

The peel strength of the sample of laminated films C and D was 4.4 kg $cm^{-1}$ whereas that of the sample of laminated films A and B was 3.0 kg $cm^{-1}$.

Example 8

The procedure of Example 3 was followed to produce films of blends of, respectively, 10g and 20g of a copolymer of tetrafluoroethylene and $CF_2$ = $CFOCF_2CF(CF_3)OCF_2CF_2SO_2F$ having an equivalent weight of 1230, and 90g and 80g of a copolymer of tetrafluoropropylene and hexafluoropropylene as used in Example 1. Each of the films (A and B respectively), and a film (C) produced by pressing a sample of the copolymer of tetrafluoroethylene and hexafluoropropylene following the procedure described in Example 3, was hydrolysed following the procedure described in Example 1, except that the hydrolysis treatment was effected for 48 hours, and the thus treated films were washed in deionised water and heated at 80 °C under vacuum for 3 hours to dry the films.

The mean contact angle to deionised water of each of the films was determined using the Sessile drop technique. The mean contact angle of films A and B was respectively 84 and 81 degrees whereas that of film C was 101 degrees.

Example 9

Several fluoropolymer blends in the form of films were evaluated as ion-exchange membranes in an electrolytic cell in which aqueous sodium chloride solution was electrolysed, following the procedure described in Example 2. The results of the evaluation are shown in Table 5.

TABLE 5

| Membrane | Current Efficiency % | Cell Voltage Volts | Chloride in NaOH ppm (w/w) | Concentration of NaOH, % w/w | Duration of Electrolysis days |
|---|---|---|---|---|---|
| A | 64 | 3.9 | 30 | 20 | >300 |
| B | 61 | 3.6 | 10 | 20 | >100 |
| C | 77 | 4.2 | 12 | 12 | |
| D | 61 | 3.4 | 70 | 20 | >80 |
| E | 60 | 3.9 | 50 | 20 | >100 |
| F | 63 | 3.4 | 100 | 20 | >35 |
| G | 80 | 3.5 | 300 | 20 | |
| H* | 58 | 2.9 | >1000 | 20 | >100 |
| I* | 73 | 2.9 | 3500 | 12 | |
| J* | 61 | 2.9 | >1000 | 20 | >100 |
| K* | 75 | 3.0 | 1900 | 12 | |
| L | 72 | 3.1 | >300 | 20 | |

* for comparison

A A 140 micron thick film of blend of 50g of a copolymer of tetrafluoroethylene and $CF_2 = CFOCF_2CF(CF_3)OCF_2CF_2SO_2F$ having an equivalent weight of 1230 and 50g of a tetrafluoroethylene-hexafluoropropylene copolymer as used in Example 1. The blend was produced and the film was hydrolysed following the procedure described in Example 1.

B 130 micron thick film of blend of 50g of a copolymer of tetrafluoroethylene and $CF_2 = CFOCF_2CF(CF_3)OCF_2CF_2SO_2F$ having an equivalent weight of 1150 and 50g of a tetrafluoroethylene- hexafluoropropylene copolymer as used in Example 1. The blend was produced and the film was hydrolysed following the procedure described in Example 1.

C As B above

D As B above except film had thickness of 60 microns.

E 130 micron thick film of blend of 50g of a copolymer of tetrafluoroethylene and $CF_2 = CFOCF_2CF(CF_3)OCF_2CF_2SO_2F$ having an equivalent weight of 1080 and 50g of a tetrafluoroethylene-hexafluoropropylene copolymer as used in Example 1. The blend was produced and the film was hydrolysed following the procedure described in Example 1.

F As E above except that film had thickness of 60 microns.

G A 230 micron thick film of blend of 75g of a copolymer of tetrafluoroethylene and $CF_2 = CFOCF_2CF_2CF_2COOCH_3$* having an equivalent weight of 700 and 25g of a tetrafluoroethylene-hexafluoropropylene copolymer as used in Example

1. The blend was produced and the film was hydrolysed following the procedure described in Example 1.

*Produced by copolymerisation following essentially the procedure described in Example 1.

| | |
|---|---|
| H | 130 micron thick film of a copolymer of tetrafluoroethylene and $CF_2$ = $CFOCF_2CF(CF_3)OCF_2CF_2SO_2F$ having an equivalent weight of 1150 produced and hydrolysed following the procedure described in Example 1. |
| I | As H above. |
| J | 130 micron thick film of a copolymer of tetrafluoroethylene and $CF_2$ = $CFOCF_2CF(CF_3)OCF_2$ $CF_2SO_2F$ having an equivalent weight of 1080 produced and hydrolysed following the procedure described in Example 1. |
| K | As J above. |

200 micron thick film of a blend of 90g of a copolymer of tetrafluoroethylene and $CF_2$ = CF $OCF_2$ $CF(CF_3)OCF_2CF_2SO_2F$ having an equivalent weight of 1210 and 10g of a copolymer of tetrafluoroethylene and perfluoropropyl vinyl ether (PFA 340 - DuPont).

## Claims

1. A homogeneous blend of organic polymeric materials which comprises from 5% to 95% by weight of at least one fluoropolymer which contains ion-exchange groups or groups convertible thereto and from 95% to 5% by weight of at least one fluoropolymer which is substantially free of ion-exchange groups or groups convertible thereto.

2. A homogeneous blend as claimed in claim 1 which is produced by melt-blending of the fluoropolymers.

3. A homogeneous blend as claimed in claim 2 in which the melting points of the fluoropolymers differ by not more than 100°C.

4. A homogeneous blend as claimed in any one of claims 1 to 3 in which both the fluoropolymer which contains ion-exchange groups or groups convertible thereto and the fluoropolymer which is substantially free of ion-exchange groups or groups convertible thereto are perfluoropolymers.

5. A homogeneous blend as claimed in any one of claims 1 to 4 in which the fluoropolymer which contains ion-exchange groups or groups convertible thereto comprises fixed anionic groups and associated cations and is capable of acting as a cation-exchange material.

6. A homogeneous blend as claimed in claim 5 in which the fluoropolymer comprises sulphonic, carboxylic or phosphonic groups.

7. A homogeneous blend as claimed in claim 6 in which the sulphonic group has the structure $-SO_2X$ in which X is OM, where M is H, alkali metal, ammonium or quaternary ammonium, or in which X is halogen.

8. A homogeneous blend as claimed in claim 6 in which the carboxylic groups has the structure -COY in which Y is OM, where M is H, alkali metal, ammonium or quaternary ammonium, or in which Y is halogen or an oxyalkyl group.

9. A homogeneous blend as claimed in any one of claims 1 to 8 in which the fluoropolymer containing ion-exchange groups or groups convertible thereto is a copolymer of tetrafluoroethylene and an ethylenically unsaturated monomer having the structure

$CF_2 = CF\text{-}A\text{-}Z$

where A is a direct link or a divalent group and Z is or comprises an ion-exchange or a group convertible thereto.

10. A homogeneous blend as claimed in any one of claims 1 to 9 in which the fluoropolymer which is substantially free of ion-exchange groups or groups convertible thereto is selected from fluorinated ethylene-propylene copolymer,a copolymer of tetrafluoroethylene and hexafluoro-propylene, polyvinylidene fluoride, a copolymer of ethylene and tetrafluoroethylene, and a tetrafluoroethylene-perfluorinated alkyl vinyl ether copolymer.

11. A homogeneous blend as claimed in any one of claims 1 to 10 in which in the fluoropolymer containing ion-exchange groups or groups convertible thereto the said groups are present in a proportion of 0.5 to 8 meq per gram of dry fluoropolymer.

12. A homogeneous blend as claimed in any one of claims 1 to 11 in which in the blend the ion-exchange groups or groups convertible thereto are present in a proportion of 0.5 to 5.0 meq per gram of dry homogeneous blend.

13. A homogeneous blend as claimed in any one of claims 1 to 12 which comprises from 15% to 95% by weight of at least one fluoropolymer which contains ion-exchange groups or groups convertible thereto and from 85% to 5% by weight of at least one fluoropolymer which is substantially free of ion-exchange groups or groups convertible thereto.

14. A homogeneous blend as claimed in claim 13 which comprises at least 40% by weight of at least one fluoropolymer which contains ion-exchange groups or groups convertible thereto.

15. A homogeneous blend as claimed in claim 14 which comprises at least 60% of at least one fluoropolymer which contains ion-exchange groups or groups convertible thereto.

16. An ion-exchange membrane which comprises a sheet or film of a homogeneous blend as claimed in any one of claims 1 to 15.

17. An ion-exchange membrane which comprises a sheet or film having a plurality of layers in which one or more layers comprise a homogeneous blend as claimed in any one of claims 1 to 15.

18. An ion-exchange membrane as claimed in claim 16 in which the sheet of film has a thickness in the range 50 to 500 microns.

19. An ion-exchange membrane as claimed in claim 17 in which the said one or more layers have thicknesses in the range 25 to 250 microns.

20. An electrolytic cell which comprises at least one anode and at least one cathode in which each anode and adjacent cathode are separated by an ion-exchange membrane as claimed in any one of claims 16 to 19.

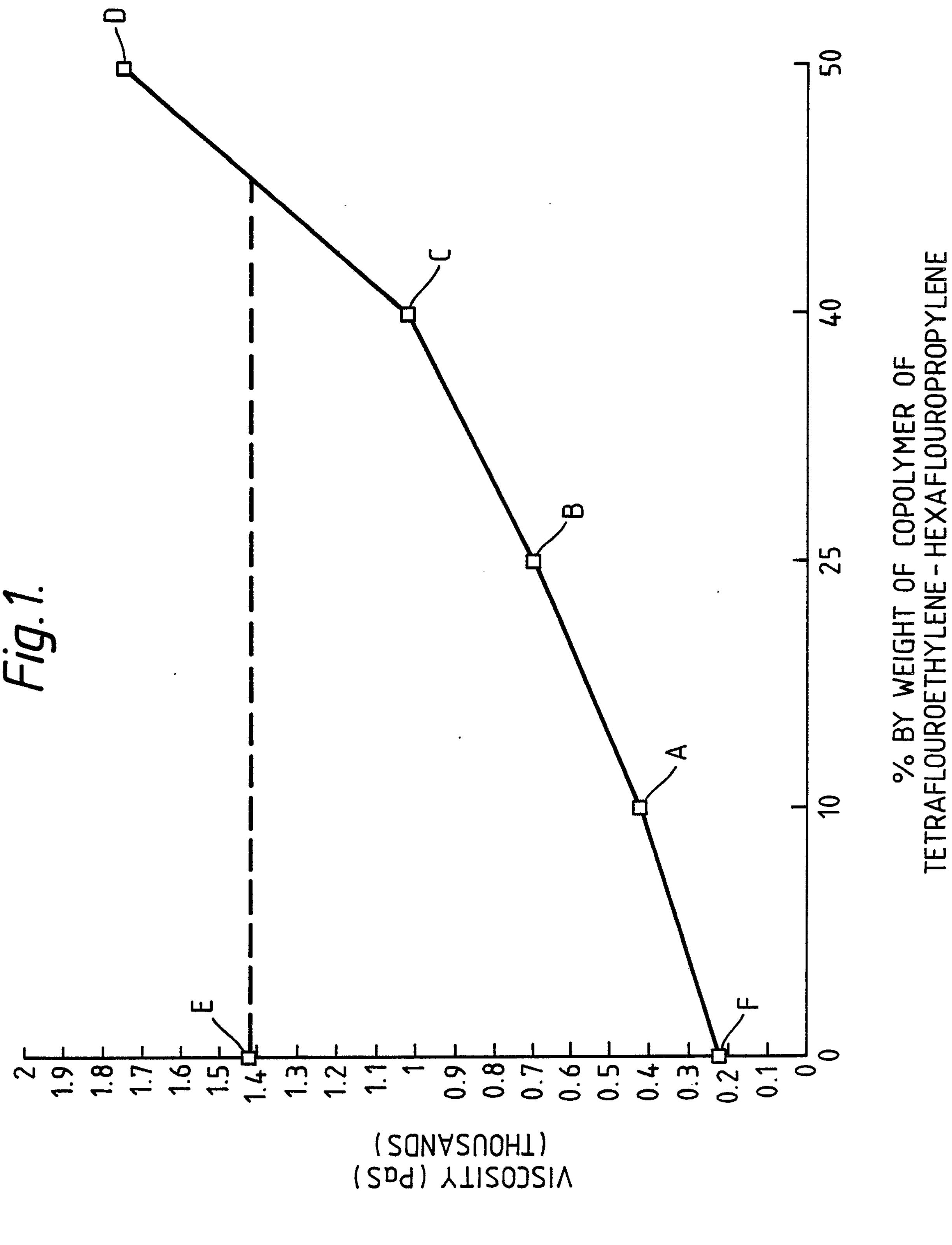

VISCOSITY (PaS)
(THOUSANDS)
2
1.9
1.8
1.7
1.6
1.5
1.4
1.3
1.2
1.1
1
0.9
0.8
0.7
0.6
0.5
0.4
0.3
0.2
0.1
0
10
25
40
50
A
B
C
D
E
F
% BY WEIGHT OF COPOLYMER OF
TETRAFLOUROETHYLENE - HEXAFLOUROPROPYLENE


Fig.1.

European Patent Office

# EUROPEAN SEARCH REPORT

Application Number

EP 89 30 5196

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 591 439 (W.G. GROT)<br>* Claims; example 1 *<br>--- | 1-20 | C 08 L 27/12<br>C 08 J 5/22<br>C 25 B 13/08<br>C 25 B 1/46 |
| X | CHEMICAL ABSTRACTS, vol. 99, no. 26, 26th December 1983, page 57, abstract no. 213718w, Columbus, Ohio, US; & JP-A-58 65 726 (ASAHI GLASS CO., LTD) 19-04-1983<br>* Abstract *<br>----- | 1-20 | |

TECHNICAL FIELDS SEARCHED (Int. Cl.4)

C 08 L
C 08 J

The present search report has been drawn up for all claims

| Place of search | Date of completion of the search | Examiner |
|---|---|---|
| THE HAGUE | 15-09-1989 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)